# EUROPEAN PATENT APPLICATION

(11) **EP 4 517 565 A1**
(43) Date of publication of application: **05.03.2025**
(21) Application number: 23193718.6
(22) Date of filing: 28.08.2023
(51) Int. Cl.: G06F 21/33, G06F 21/44, G06F 21/57, H04L 9/40

(54) **PROVIDING DEVICES WITH UPDATES**

(71) Applicant: Koninklijke Philips N.V., 5656 AG Eindhoven (NL)
(72) Inventor: BERNALDEZ PEREDA, Ángel, Eindhoven (NL); SABAH, Noureddine, Eindhoven (NL); GARCIA MORCHON, Oscar, Eindhoven (NL)
(74) Representative: Philips Intellectual Property & Standards

(57) **Abstract**

This invention describes a method, apparatus and computer program for authorizing a providing entity to provide updates to a target device. A managing entity is configured to determine that the data storage unit comprises an entry to associate the new providing entity with the target device, or add the entry to the data storage unit, so as to provide updates to the target device. The managing entity is further configured to determine that the new providing entity is associated with a valid digital certificate signed with a cryptographic signature of the managing entity or of a previous providing entity authorized to provide updates to the target device. In response, the managing entity is configured to publish in the data storage unit a cryptographically signed statement authorizing the new providing entity to provide updates to the target device.

## Description

### FIELD OF THE INVENTION

This invention relates to a method, device and system for authorising update providers to provide updates to devices, and to a method, device and system for providing updates to a device, and to a method, device and system for processing an update.

### BACKGROUND OF THE INVENTION

Firmware updates are a crucial aspect of a (IoT) device's life cycle. To ensure that a device is functioning correctly and is protected against known vulnerabilities, it is paramount to provide it with firmware updates/upgrades. Generally, providing devices with firmware updates/upgrades is the responsibility of the device vendor. However, the vendor may not be able to provide such a service due to several reasons, such as, devices reaching the end of their life cycle, merging with another company, and discontinuing old device, bankruptcy, low resources to integrate updates of libraries/modules, etc. Another problem with firmware updates is that often firmware updates are monolithic, leading to a slow pace when fixing vulnerabilities, as well as large performance overheads. This is due to the whole firmware update needing to be distributed when only a small firmware module (e.g., application, networking driver, etc) needs to be updated.

Matter is a standard for IoT networks that considers software updates. However, a problem with the existing Matter standard is that it does not include procedures to handle software updates of devices where the original provider of the updates is no longer willing or able to do so (e.g. for discontinued devices), nor does it enable devices to be updated in a modular manner.

### SUMMARY OF THE INVENTION

It is an object of the present invention to authorise new entities to provide updates and/or upgrades to existing devices. The present invention ensures that legitimate firmware/software updates and/or upgrades can be provided to devices whose original vendors no longer maintain, or are no longer able to provide support to, the device(s) or part of the devices (e.g. certain software modules). The present invention enables the assignment of new trusted maintainers to products/software modules, thereby guaranteeing the authenticity of firmware updates. It is also an object of the present invention to authorise new entities to provide modular updates and/or upgrades to existing devices. Embodiments may be used to update IoT devices in compliance with the Matter standard.

This object is achieved by a methods, apparatuses and computer programs as claimed in the appended claims.

According to a first aspect disclosed herein, there is provided a computer-implemented method for authorizing a providing entity to provide updates to a target device, wherein the target device is configured to process updates only from an authorized providing entity, wherein a data storage unit comprises entries relating to one or more devices wherein the method is performed by a managing entity and comprises: determining that the data storage unit comprises, or adding to the data storage unit, an entry to associate the new providing entity with the target device, so as to provide updates to the target device; determining that the new providing entity is associated with a valid digital certificate signed with a cryptographic signature of the managing entity or of a previous providing entity authorized to provide updates to the target device, and in response, publishing in the data storage unit a cryptographically signed statement authorizing the new providing entity to provide updates to the target device.

According to a second aspect disclosed herein, there is provided an apparatus embodying a managing entity configured to authorize a providing entity to provide updates to a target device, wherein the target device is configured to process updates only from an authorized providing entity, wherein a data storage unit comprises entries relating to one or more devices. The managing entity is configured to determine that the data storage unit comprises an entry to associate the new providing entity with the target device, or add the entry to the data storage unit, so as to provide updates to the target device; determine that the new providing entity is associated with a valid digital certificate signed with a cryptographic signature of the managing entity or of a previous providing entity authorized to provide updates to the target device, and in response, publish in the data storage unit a cryptographically signed statement authorizing the new providing entity to provide updates to the target device.

According to a third aspect disclosed herein, there is provided a computer program embodied on computer-readable storage and configured so as, when run on one or more processors, to perform a method of authorizing a providing entity to provide updates to a target device, wherein the target device is configured to process updates only from an authorized providing entity, wherein a data storage unit comprises entries relating to one or more devices wherein the method is performed by a managing entity and comprises: determining that the data storage unit comprises, or adding to the data storage unit, an entry to associate the new providing entity with the target device, so as to provide updates to the target device; determining that the new providing entity is associated with a valid digital certificate signed with a cryptographic signature of the managing entity or of a previous providing entity authorized to provide updates to the target device, and in response, publishing in the data storage unit a cryptographically signed statement authorizing the new providing entity to provide updates to the target device.

According to a fourth aspect disclosed herein, there is provided a computer-implemented method of updating software and/or firmware of a device, wherein a data storage unit comprises entries relating to one or more devices and/or types, wherein the method is performed by a target device and comprises: obtaining an update for at least part of the a software module and/or firmware of the device, wherein the update is provided by a new providing entity; obtaining a statement authorising the new providing entity to provide updates to the target device; verifying that the statement is cryptographically signed by a managing entity or a previous providing entity; and processing the update, wherein said processing of the update is dependent at least upon said verification of the statement.

According to a fifth aspect disclosed herein, there is provided an apparatus embodying a target device configured to update software and/or firmware of the device, wherein a data storage unit comprises entries relating to one or more devices and/or types. The target device is configured to obtain an update for at least part of the a software module and/or firmware of the device, wherein the update is provided by a new providing entity; obtain a statement authorising the new providing entity to provide updates to the target device; verify that the statement is cryptographically signed by a managing entity or a previous providing entity; and process the update dependent at least upon said verification of the statement.

According to a sixth aspect disclosed herein, there is provided a computer program embodied on computer-readable storage and configured so as, when run on one or more processors, to perform a method of updating software and/or firmware of a device, wherein a data storage unit comprises entries relating to one or more devices and/or types, wherein the method is performed by a target device and comprises: obtaining an update for at least part of the a software module and/or firmware of the device, wherein the update is provided by a new providing entity; obtaining a statement authorising the new providing entity to provide updates to the target device; verifying that the statement is cryptographically signed by a managing entity or a previous providing entity; and processing the update, wherein said processing of the update is dependent at least upon said verification of the statement.

According to a seventh aspect disclosed herein, there is provided a system comprising the managing entity and the target device.

Accordingly, the invention provides a method, apparatus and system to enable a managing entity (e.g., a product vendor) to authorize and assign a new update provider (e.g. device maintainer) to a device and/or software product/segment/module. The method, apparatus and system also enable a requesting device to discover that it has been assigned a new maintainer, and to enable the requesting device to cryptographically verify the legitimacy of a new update provider.

Embodiments of the invention may be used to provide system and device enhancements to the Matter standard and Matter-compliant devices. More generally, embodiments enable new update providers to be authorized and assigned to products which are no longer maintained by their original vendors, and enhance the firmware update mechanism to account for firmware updates provided by new providers. Embodiments enable the requesting device (e.g. an IoT device) to verify that a new update provider is authorized to distribute firmware updates, and verify a firmware update distributed by said new update provider. Some embodiments enable the requesting device to identify and verify modular firmware updates.

According to a first option that can be combined with any one of the first to third aspects, each providing entity is associated with a respective provider identifier, wherein the entries relating to the one or more devices comprise respective update certification statuses, each update certification status linked to a respective software module identifier, and wherein the method comprises linking an update certification status of a software module to the provider identifier of the new providing entity.

According to a second option that can be combined with the first option, the method comprises verifying the respective update certification status linked to the software module identifier of the software module and a provider identifier of the previous providing entity; and if said verification passes, transferring the update certification status to the new providing entity by revoking the update certification status linked to the provider identifier of the previous providing entity and performing said linking of the update certification status of the software module to the provider identifier of the new providing entity.

According to a third option that can be combined with the first option or the second option, the method comprises determining a new providing entity to authorise to provide updates to the target device.

According to a fourth option that can be combined with the third option, the method comprises receiving or detecting a request from the previous providing entity to terminate authorisation of the previous providing entity to provide updates to the target device, wherein said determining of the new providing entity is based on said receiving or detecting of the request.

According to a fifth option that can be combined with the fourth option, the request comprises an indication of the new providing entity.

According to a sixth option that can be combined with any of the third to fifth options, the method comprises determining that the previous providing entity has not provided an update to the target device during a time period, wherein said determining of the new providing entity is in response to determining that the previous providing entity has not provided an update to the target device during a time period.

According to a seventh option that can be combined with any of the third to sixth options, the method comprise receiving or detecting an indication, from a different device belonging to the same network as the target device, that the target device has not been provided an update during a time period, wherein said determining of the new providing entity is in response to determining that the previous providing entity has not provided an update to the target device during a time period.

According to an eight option that can be combined with the sixth option or the seventh option, a duration of the time window is determined by any of the managing entity, the previous providing entity, the different device, a device standard.

According to a ninth option that can be combined with any of the sixth to eighth options, a duration of the time window is based on a severity of one or more vulnerabilities in one or more devices modules of the target device.

According to a tenth option that can be combined with the ninth option, the time window is triggered in response to detection of the one or more vulnerabilities.

According to an eleventh option that can be combined with the tenth option, the method may comprise receiving an alert of the one or more vulnerabilities from the different device.

According to a twelfth option that can be combined with any of the first to eleventh options, the method may comprise providing the new providing entity with the device identifier of the target device to enable the new providing entity to submit the entry to the data storage device.

According to a thirteen option that can be combined with any of the first to twelfth options, the new providing entity may be authorized to provide updates to the target device for a limited time window. For example, the limited time window may be based on a severity of the one or more vulnerabilities and/or a policy.

According to a fourteenth option that may be combined with any of the fourth to sixth aspects, the update for the module is associated with a software module identifier, and wherein the method comprises: obtaining an update certification status linked to the software module identifier of the module and the provider identifier of the new providing entity; and verifying that the update certification status is cryptographically signed by the managing entity, wherein said processing of the update is dependent at least upon said verification of the update certification status.

According to a fifteenth option that can be combined with any of the fourth to sixth aspects or any of thirteenth or fourteenth options, at least part of the software and/or firmware may be a module.

According to a seventh aspect disclosed herein, there is provided a computer-implemented method for providing modular software updates to a target device, wherein the target device is configured to process updates only from an authorized providing entity, wherein a data storage unit comprises entries relating to one or more devices, wherein the method is performed by an update facilitator and comprises: obtaining an update for at least part of the software and/or firmware of the target device from the data storage unit; verifying that the update is signed with a cryptographic signature of an authorized providing entity; verifying that the data storage unit comprises an entry linked to an identifier of the update and a provider identifier of the authorized providing entity, and that the entry is signed with a cryptographic signature of a device vendor or a managing entity; and making the update available to the target device. Computer equipment and computer program configured to implement the method of the seventh aspect are also provided.

It shall be understood that the claimed methods, computer equipment, and computer program may have similar and/or identical embodiments, in particular, as defined in the dependent claims.

It shall be understood that a preferred embodiment can also be any combination of the dependent claims or above embodiments with the respective independent claim.

These and other aspects will be apparent from and elucidated with reference to the embodiments described hereinafter.

### BRIEF DESCRIPTION OF THE DRAWINGS

In the following drawings:
Fig. 1 schematically shows a block diagram of a device according to various embodiments;
Fig. 2 schematically shows a block diagram of a system according to various embodiments,
Fig. 3 shows a process flow diagram for authorizing a new update provider of a device, and
Fig. 4 shows a process flow diagram for providing firmware updates in a network,

### DETAILED DESCRIPTION OF EMBODIMENTS

Embodiments are now described based on Internet of Things (IoT) network systems. Such systems may be applied in a home networking system, or a commercial (e.g. an office), industrial (e.g. a factory) or public (e.g. a hospital) space. It should be noted that the embodiments may be applied more generally to any networked system in which an initial (or current) provider of updates/upgrades ceases to provide such updates/upgrades to a device.

Moreover, whilst embodiments are described in terms of a network of (e.g. IoT) devices, it should be noted that the same embodiments may be applied to update/upgrade a stand-alone device, i.e. a network comprising a single device.

Throughout the following disclosure, an "IoT network" is understood as a network of data-producing and/or data-gathering devices, e.g. capable of (wireless) sensing and/or transmitting data, such as light, presence, sound, images, etc.

Various technologies exist for managing IoT networks, of which Matter is one. Matter is an open-source smart home and Internet of Things (IoT) connectivity standard with the aim to improve compatibility and security and enable interoperability between IoT devices and platforms by different vendors. It is maintained by the Connectivity Standards Alliance (CSA), and the first version of the standard specification was published in October 2022.

There is a general need to protect against counterfeit devices and firmware. As part of Matter, and with this goal in mind, to record device provenance, and ensure protocol conformance, the CSA created the Distributed Compliance Ledger (DCL), a cryptographically secure, distributed network that allows device manufacturers (vendors), official test houses, and certification centers to publish public information about products, and is used for tracking certification status and Vendor maintained information such as, product names, and firmware URLs.

Whilst some examples are described in the context of the Matter standard, it should be noted that the described embodiments apply more generally to any type of network and network standard. For instance, the network may be any type of IoT network. Devices of the network may conform to any type of standard, such as ZigBee or Z-wave. Devices of the network may be connected via any type of wireless connection, such as radio or cellular connections.

More generally, embodiments of the present application may be used to provide updates/upgrades not just to software module s/firmware of the device, but also to applications and/or software plug-ins installed on the device, such as an application add-ins (e.g. power point add-ins) where the add-in developer is no longer able to provide add-ins (e.g. because they are going out of business). In this scenario a statement may be signed to introduce a new add-in provider. As such, any reference to update/upgrade made herein may also refer to a new add-in, unless the context requires otherwise.

Firmware is the software embedded in the device which operates and controls the device hardware and manages how the device behaves and communicates with other software and devices. It is important to keep IoT devices' firmware up to date, and among the procedures specified in the Matter Standard, the "over-the-air (OTA) Software Update" procedure in section 11.19 describes how security and/or functional feature updates are requested by or pushed to IoT devices. The main steps are as follows:
1. The first step is to announce OTA provider application presence using chip-tool, and the OTA requestor application queries for OTA image from the OTA provider application.
2. The OTA provider sends a query to the DCL image selection logic for an update to the requestor device. This logic replies with the firmware image URL to be downloaded by the provider.
3. The OTA provider responds busy while downloading the image from the Vendor server.
4. When the provider gets the image, it responds that it is available to the Requestor and starts the file transfer to the requestor.
5. Once the image is in the OTA requestor application, this sends an ApplyUpdateRequest to the OTA provider application for applying the image, and the device restarts applying the new firmware image.

These steps may differ slightly depending on the particular device to be updated, finding different implementations of OTA provider applications and OTA requestor application in the Matter repository.

There are several mechanisms to manage (e.g., monitor, request, and provide) firmware updates/upgrades in IoT devices, and it is generally the responsibility of the device manufacturer to maintain its IoT device. However, maintenance may be disrupted due to various reasons, such as, the IoT device reaching the end of its life cycle, the device manufacturer merging with another company and discontinuing old devices, the device manufacturer going bankrupt, the device manufacturer is not able to release software updates fast enough addressing security vulnerabilities in underlying libraries.

In such cases, IoT devices, which remain operational, are no longer provided with firmware updates/upgrades or may only be provided with them too late, and consequently these devices run the risk of being attacked, controlled, and/or misused by malicious parties.

This is the root problem that this invention addresses Furthermore, in the context of the Matter Standard, there is also the problem that manifests itself in the firmware/software update mechanism specified, which grants the right to supply firmware updates/upgrades to devices exclusively to device manufacturers. That is, if a device manufacturer can no longer provide firmware updates/upgrades to its software products, a trusted/legitimate maintainer that is willing to take that responsibility cannot, because the current Matter Standard does not specify or cover several aspects which include, but are not limited to, the following:
- How a device manufacturer can delegate/authorize a maintainer to manage its product(s),
- How a new maintainer can be assigned to an abandoned product (e.g., in case the device manufacturer does not delegate/authorize a maintainer and does not provide any updates/upgrades for a certain period),
- How a device discovers whether it was assigned a new maintainer,
- How a device verifies the authenticity/legitimacy of the new maintainer.

It should be understood that, whilst these problems are described in relation to Matter, they may be present in other systems for managing IoT networks.

Another problem with firmware/software updates relates to IoT devices being comprised of multiple components, e.g., operating system (OS) and applications, where the OS also includes several libraries e.g., input/output and networking libraries/interfaces, which may not always be updatable in a modular manner. In some situations, it is beneficial to update components e.g., libraries (e.g., networking libraries) independently of the applications/OS. This may be beneficial because, if a vulnerability is detected in a library, a different entity than the vendor may be authorized to update it. This also reduces network traffic and energy consumption. However, this capability is not available in Matter.

The following embodiments are directed to methods and devices for providing devices with updates and/or upgrades to firmware and/or software of the device.

It should be noted that throughout the present disclosure only those blocks, components and/or devices that are relevant for the described updating of devices are shown in the accompanying drawings. Other blocks have been omitted for reasons of brevity. Furthermore, blocks designated by same reference numbers are intended to have the same or at least a similar function, so that their function is not described again later.

In general each apparatus mentioned herein comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each apparatus also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

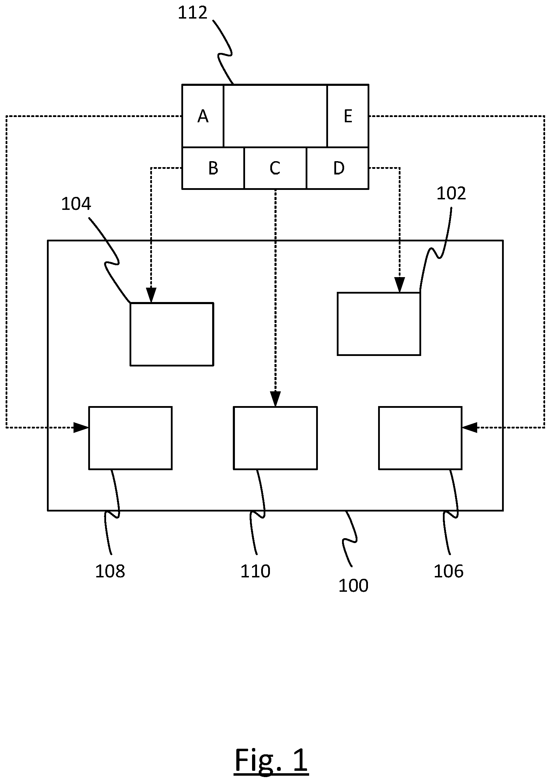

Fig. 1 schematically shows a block diagram of a device 100. The device 100 comprises a memory component (e.g. EEPROM, eFlash, etc.) 102, a connectivity component (e.g. Wi-Fi, Thread, Bluetooth, etc.) 104, a storage component 106, a processing component (e.g. a CPU, one or more GPUs, etc.) 108, an input/output component (e.g. for sensors and/or actuators) 110, and a firmware module 112. For ease of viewing the firmware module 112 is shown separate from the device 100, but of course the firmware module 112 is in fact comprised by the device 100. The firmware module 112 comprises different segments (A to E). One or more of the components may be controlled by different segments of the device's firmware. For instance, segment A may control the processing component 108, segment B (e.g. a libraries and/or code segment) may control the connectivity component 104, segment C may control the input/output component 110, and so on. Each segment of the firmware module 112 may be updated separately.

The device 100 may be an IoT device. The IoT device 100 may comprise one or more sensors and/or actuators. Sensors are increasingly used in local networks such as home networks and home automation systems. They can measure temperature, light conditions, but also more personal data like, respiration rate, occupancy, identity, blood pressure (mobile sensor), and all kind of other medical data, movement patterns, etc.

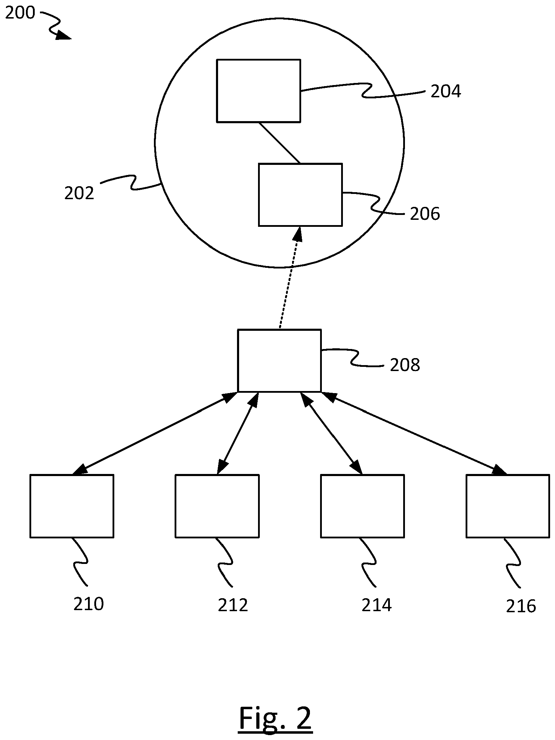

Fig. 2 schematically shows a block diagram of an example system 200 for updating the device 100 of Fig. 1. The system 200 includes a network (also referred to as a "fabric", in the context of Matter) 202 of devices, e.g. IoT devices. In this example, the network 202 includes at least one requesting device 204 (a device requiring firmware updates, such as the device 100 of Fig. 1) and one providing device 206 (a device that may provide or at least facilitate the provision of an update). The requesting device 204 and providing device 206 may be referred to as an over-the-air (OTA) Requestor 204 and OTA provider 206, respectively. The providing device 206 is not required in all embodiments, in which case the requesting device 204 may interact directly with the data storage unit 208. The system 200 also includes a managing entity 210 (e.g., the Connectivity Standard Alliance (CSA)), an original/previous update provider (e.g. the device vendor) 212 and the new update provider (or new maintainer) 214 to be assigned to the requesting device 204. The system 200 may include an entity 216 which releases updates for a part/segment of the firmware (e.g., segment B (e.g., networking/connectivity libraries) of the firmware of the device 100 shown in Fig. 1). The system 200 further comprise a data storage unit 208 (e.g., a Decentralized Compliance Ledger) configured to store information managed by the managing entity 210.

In general, the data storage unit 208 includes entries relating to one or more devices 100. For example, the data storage unit 208 may include one or more entries relating to requesting device 204. Each device 100 is associated with a device identifier. Each update provider (including the original update provider 212 and the new update provider 214) is associated with a provider identifier. The data storage unit 208 stores entries relating to the authorization of update providers to provide updates and/or upgrades to devices. The data storage unit 208 may store certification statuses relating to particular firmware/software segment (e.g. modules, packages, products, etc.). The status of the certificate dictates whether the update provider is authorized to provide an update/upgrade to that firmware/software segment.

In some examples, the data storage unit 208 may include one or more of the following schemas/databases:
- A Vendor Schema storing information about vendors (i.e. device manufacturers), e.g., Company name, Vendor ID, landing page, etc.
- A Device Model Schema storing Information about products (e.g., Product name, Product ID, PartNumber, Commissioning info), which is shared across the software versions of the products.
- A Device Software Version Model Schema storing information specific to a software version of products e.g., release Notes URL, firmware Digests, over-the-air software image URL.
- A Device Software Compliance Schema storing information specific to the certification of particular software versions of products, and which is writable and mutable only by the managing entity 210.
- A Product Attestation Authority Schema which allows approved Product Attestation Authorities Certificates to be uploaded and made available via DCL queries.

The data storage unit 208 may be configured such that write access to the storage data unit is restricted to the managing entity 210 (and in some examples the update providers), while read access is public, i.e., any entity of the system can read the data stored in the data storage unit 208. For instance, Vendors can write into/submit entries to the Device Model Schema to publish or update device information corresponding to their products, and the managing entity 210 Certification Center can write and update (e.g., revoke) the certification status of a product software version.

In some examples, devices (e.g. Matter compliant devices) comprise (e.g. are shipped with) a unique identifier (e.g. a Device Attestation Certification (DAC)) which guarantees device compliance and provenance as it is signed by a certificate authority (e.g. a Product Attestation Intermediate (PAI) certification authority), such as device manufacturers. The PAI certificate in turn is signed by a product authority (e.g. a Product Attestation Authority (PAA) certification authority), which is the trusted root certificate that acts as the anchor of a chain of trust of certificates.

The public key from the associated PAI certificate is used to cryptographically verify the DAC signature. The PAI certificate in turn is signed and attested to by the Product Attestation Authority (PAA) certification authority. The public key from the associated PAA certificate is used to cryptographically verify the PAI certificate signature. The PAA certificate is an implicitly trusted self-signed root certificate. In this way, the DAC chains up to the PAI certificate, which in turn chains up to the PAA root certificate.

Commissioners use PAA and PAI certificates to verify the authenticity of a Commissionee before proceeding with the Commissioning flow. The device attestation procedure is executed by Commissioners when commissioning a device. It serves to validate whether a particular device is certified for (Matter) compliance and that it was legitimately produced by the certified manufacturer.

The Device Attestation Certificate may be read at any time. The Commissionee makes the Certificate available whenever requested. This may be done by using "CertificateChainRequest Command".

The PAA is validated for presence in the Commissioner's trusted root store, The DAC certificate chain is validated during the commissioning process using the Crypto_VerifyChainDER() function, taking into account the mandatory presence of the PAI and PAA, ensuring that the entire chain has a length of exactly 3 elements (PAA certificate, PAI certificate, Device Attestation Certificate) and fulfills the necessary format policies.

Once these validations were done, these certificates are stored in the Certification Declaration that is a cryptographic document that allows a device to assert its protocol compliance.

The managing entity 210 may be configured to determine that a new update provider 214 is required to provide updates to the requesting device 204. For example, the original/previous update provider 212 may be configured to inform the managing entity 210 that it is no longer able and/or willing to provide updates to the requesting device 204. The original/previous update provider 212 may also inform the managing entity 210 of which update provider is to be the new update provider 214 of the requesting device 204. The original/previous provider may inform the managing entity 210 directly (e.g. by sending a message to the managing entity 210) or indirectly (e.g. via intermediary or by publishing information indicating that the original/previous provider can no longer provide updates). As another example, the new provider may be configured to (directly or indirectly) inform the managing entity 210 that the original/previous provider can no longer provide updates. It is also an option that the requesting device 204 may inform the managing entity 210 that it is no longer being provided updates and that a new update provider 214 is required.

At the time the managing entity determines that a new update provider 214 is required, the data storage unit 208 may already include one or more existing entries relating to the requesting device 204. For example, the requesting device 204 may be an existing device of the network and may have previously been provided with one or more updates/upgrades by the previous update provider 212.

Alternatively, at the time the managing entity determines that a new update provider 212, the data storage unit 208 may not include any entries relating to the requesting device. For example, the requesting device 204 may be newly added to the network and/or the requesting device 204 may have yet to receive any updates/upgrades from the (or any) previous update provider 212. Put another way, the embodiments described herein may be used to authorize an update provider 214 to provide updates to a device, regardless of whether that device has been provided with any updates in the past or not.

In some examples, the managing entity 210 may be configured to determine that a new update provider 214 is required by detecting (e.g. by being informed by the new update provider 214, the requesting device 204, or the OTA provider) that the original/previous update provider 212 has not provided an update to the requesting device 204 for more than an allowable time period, e.g. within the last one week, two weeks, one month, etc. The time period during which the original/provider must provide an update to the requesting device 204 may be set by the managing entity 210, or the original/previous provider, or the requesting device 204, or the OTA provider. In some examples, the duration is set by a standard by which all entities must adhere to, e.g. the Matter standard. The time period may, additionally or alternatively, be based on known vulnerabilities with one or more firmware segments of the requesting device 204. The vulnerabilities may be detected by the managing entity 210, the original/previous provider, the requesting device 204, or the OTA provider. That is, a vulnerability may be detected with a firmware segment, which may influence the time period. For instance, the detection of the vulnerability may shorten the time period, e.g. from one month to one week. The detection of the vulnerability may trigger the time period. That is, the original/previous provider may be required to provide an update to deal with the vulnerability within a certain duration once the vulnerability is realised.

The managing entity 210may be configured to determine that the data storage unit 208 comprises a new entry (e.g. a request entry) to associate the new update provider 214 as a provider of updates to the requesting device 204. The managing entity 210 may determine that a new update provider 214 is required based on the new entry. The new update provider 214 may itself submit the entry to the data storage unit 208. Or, the entry may be submitted by the original/previous update provider 212. In some examples, the managing entity 210 is configured to detect new entries to the data storage unit 208. In other examples, the managing entity may be informed by another entity (e.g. the new update provider 214) that a new entry has been submitted to the data storage unit 208.

As another option, the managing entity 210 may be configured to submit the entry to the data storage unit 208 (e.g. in response to determining that a new update provider 214 is required). That is, rather than detecting or being informed that a new entry has been submitted to the data storage unit 208, the managing entity 210 itself may create the entry. In other words, the entry is added to the data storage unit by the managing entity 210, e.g. in response to detecting or being informed that a new update provider 214 is required.

The managing entity 210 is also configured to determine (e.g. check, verify, etc.) that the new update provider 214 is associated with a valid digital certificate issued by the managing entity or the original/previous update provider 212. Here, a digital certificate is issued by an entity if it is signed by (e.g. includes) a digital signature that has been signed using a cryptographic (private) key associated with that entity. This may be verified using a corresponding public key. Any suitable digital signature scheme, such as ECDSA may be used. If the new update provider 214 is associated with a valid digital certificate, the managing entity 210 may publish (i.e. submit) an entry to the data storage unit 208 that includes a statement authorising the new update provider 214 to provide updates to the requesting device 204. The statement is signed using a cryptographic (private) key controlled by the managing entity 210 and can be verified using the corresponding public key.

Publishing the statement described above may be enough to authorise the new update provider 214 to provide updates/upgrades to the requesting device 204. However in some examples the new update provider 214 must also be authorised to provide updates/upgrades of specific firmware/software segments. Each segment (also referred to herein as a product, or a product module) may be associated with a product (or update) identifier. The data storage unit 208 stores certification status entries that are linked to a provider identifier and a product identifier. The status must be valid in order for the update provider having the linked provider identifier to be authorised to provide an update to that product. To authorise the new update provider 214 to provide updates to the product, the managing entity 210 may link (e.g. modify) the certification status of the product to the product identifier of that product. This may include transferring the certification status from the previous update provider 212 to the new update provider 214 by revoking the certification status linked to the previous update provider 212.

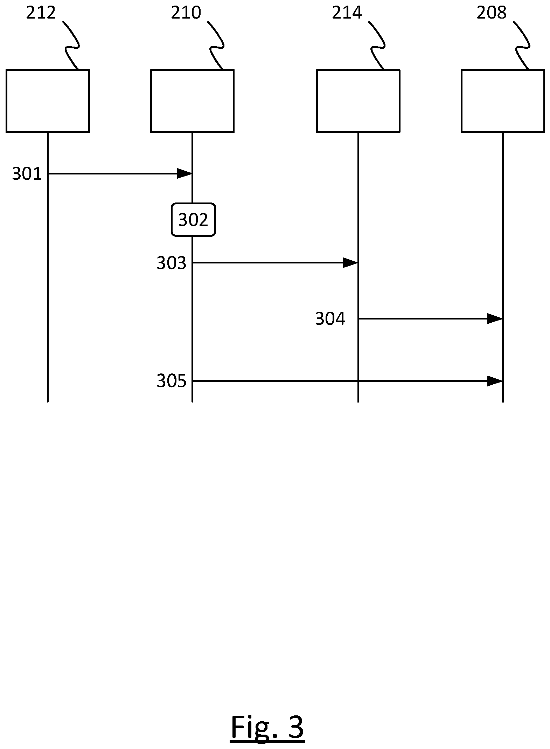

Fig. 3 is a flow diagram showing an example method for assigning a new maintainer (i.e. the new update provider 214) a product (e.g. firmware segment) by the managing entity 210 upon a request from the product's original vendor (i.e. the previous update provider 212).

In Step 301, the previous update provider 212 signals, announces, or informs the managing entity 210 about the software update termination situation/reason, e.g., that it is discontinuing a product, or class of products (i.e., the vendor will no longer provide firmware updates/upgrade to the product(s)), thus triggering the procedure of assigning a new maintainer to the product(s) impacted.

In Step 302, the managing entity 210 processes the request coming from the previous update provider 212 and decides which maintainer to assign to the product(s) to be discontinued e.g., assign a new maintainer/vendor altogether or an existing vendor. The previous update provider 212 may have also included in the request an indication / proposal of the new maintainer.

In Step 303, the managing entity 210 informs the new maintainer about the product(s) it needs to associate itself with and provides it with the product(s) information (e.g. the product ID of the product and the device ID of the requesting device 204) to submit the new entries in the data storage unit 208. The managing entity 210 may publish a statement in indicating that the new maintainer has taken over the responsibility from the previous update provider 212. In some cases, the previous update provider 212 may directly request this to the new maintainer, in which case, Step 301 may not be required. In some cases, the previous update provider 212 may also directly publish the statement in the data storage unit 208 that a new update provider 214 is taking over.

In Step 304, the new update provider 214 submits/publishes entries to the data storage unit 208 (e.g. the Device Schema, and Device Software Version Model Schema) to associate the product(s) ID(s) (PIDs) with its ID (VIDₘ).

In Step 305, upon verification/approval of the new entries for the product in the data storage unit 208 (e.g. the Device Software Version Model Schema) and associating the product ID (PID) with the new provider's ID (VIDₘ), the managing entity 210 checks the certification status of the latest software version linked to the product ID (PID) and its original vendor ID (VIDₒ), and if certified, the managing entity 210 transfers the certification status to the product identified by (PID, VIDₘ), and revokes the software version certification status corresponding to the old product (PID, VIDₒ). In some cases, this statement may be directly released by the original product vendor.

In a variant of step 301, the original vendor may not signal, announce, or inform the managing entity 210 that it is discontinuing a product, or class of products, and instead stops providing firmware updates/upgrades. In this case, the managing entity 210 may define a max_time_toUpdate (e.g., time window of three months) based on which, if no updates are provided during that period, the managing entity 210 checks/verifies whether the vendor intends to maintain its product(s) or not. Based on the verification, the managing entity 210 either resets the max_time_toUpdate or triggers the procedure of assigning a new maintainer to the product(s) impacted. This new provider may also be assigned in a temporary basis or dependent on specific conditions that may be pre-agreed or defined or available in the data storage unit 208, e.g., when no software updates are released in a given period of time, or when security vulnerabilities of a given criticality are not addressed withing a time window.

In another variant, a device, e.g., acting as the OTA Provider within a fabric where an IoT Device is active, may signal/inform the managing entity 210 that no firmware updates have been made available to the IoT device for a period that exceeds max_time_toUpdate, thus triggering a check/verification of the device manufacturer by the managing entity 210. The OTA Provider may also be a dedicated device in charge of monitoring that the release of software updates occurs according to a predefined policy, e.g., in a regular manner.

In some examples, the max_time_toUpdate defined in a policy, e.g., by the managing entity 210, determines a deadline to provide updates, which corresponds to: date of the latest update + max_time_toUpdate. Such deadline may be computed by the OTA provider/managing entity 210 by which to trigger a check/verification of the device manufacturer. This time may be dependent on the severity of security vulnerabilities present in the firmware, e.g., this may depend on the severity of a Common Vulnerability and Exposure (CVE) available [2].

In some examples, when there is a known vulnerability in a product or a firmware component, a new parameter could be added to mark the product(s) using the software component as vulnerable, at which point the original vendor may need to provide an update to the product(s) within a specified period of time otherwise the managing entity 210 (e.g. the CSA) may designate a new maintainer and perform a change of ownership of the product. The fact that a product may be vulnerable may be stored in a database of CVEs.

In some examples, an OTA provider may keep track of the devices that are available in its fabric and monitor vulnerabilities applicable to the devices within that fabric. The OTA provider may take various actions depending on whether it determines the presence of a vulnerable device and/or potential firmware update, such as, for example:
- Request firmware update addressing a vulnerability;
- Indicate to the user/managing entity 210 the presence of a vulnerable device;
- Apply additional monitoring of the communications with/interactions of the device, in particular, for those related to the vulnerability;
- Limit/filter traffic with a vulnerable device.

Some of above actions/restrictions may be applicable as long as the vulnerable device has not been updated.

In some examples, a new maintainer/provider assigned by the managing entity 210 to a product may either be an existing vendor (i.e., an existing entry in data storage unit 208 (e.g. the Vendor Schema) corresponds to the new maintainer) or a new vendor, in which case the managing entity 210 creates an entry in the data storage unit 208 (e.g. in the Vendor Schema).

If the new maintainer is not an existing vendor, it may require a Product Attestation Intermediate (PAI) certificate that is issued and signed by one of the Product Attestation Authorities (PAA), which guarantees the new maintainer's authenticity and legitimacy.

Turning now to the requesting device 204. The requesting device 204 is configured to obtain an update for one of its segments/modules, or for the software/firmware as a whole. The update is provided by the new update provider 214. The new provider may send the update directly to the requesting device 204, or via a different device (e.g. the OTA provider) or the managing entity 210. The new update provider 214 may instead publish the update at a resource accessible by the requesting device 204 (e.g. the data storage unit 208) from which it may be retrieved by the requesting device 204.

The requesting device 204 is also configured to obtain a statement, published in the data storage unit 208, which authorizes the new provider to provide updates to the requesting device 204. Again, the requesting device 204 may obtain the statement itself, or via a different device or entity, or by accessing the data storage unit 208.

The requesting device 204 stores one or more public keys, including a public key associated with the managing entity 210. The requesting device 204 is configured to use the public key to verify that the statement is signed by the managing entity 210. If the verification passes, the requesting device 204 may process (i.e. install/execute) the update. If the verification does not pass, the requesting device 204 rejects the update.

In some examples, the requesting device 204 also obtains a certification status of the update and verifies that the certification status is linked to a product/module identifier of the module to be updated, and to the provider identifier of the new update provider 214. In these examples both verifications must pass in order for the requesting device 204 to process the update.

The requesting device 204 may verify the software/firmware update before installing the update. For example, the requesting device 204 may run one or more scans on the received update to check for viruses, etc.

To summarize, embodiments described herein provide apparatuses and methods that enable the authorizing/ assigning of a new maintainer (i.e. new update provider 214) to a device (and, in some examples, a product of the device), to ensure that firmware updates/upgrades can be provided to it in case the original vendor (i.e. previous update provider 212) no longer maintains the device and/or product.

A cryptographically signed statement of the authorization and assignment of a new maintainer is published in a data storage unit 208 (e.g. by a managing entity 210 or the original vendor) such that it can be verified. The new maintainer may submit entries to the data storage unit 208 (e.g. the Device Model Schema and Device Software Model Schema) thus associating the product ID (PID) of the updateable module to its vendor ID (VID).

The managing entity 210 may approve or reject the new maintainer's entries published upon verification of the new maintainer's (e.g. PAI) certificate and, if any, the original vendor's statements.

The managing entity 210 may check the latest software version certification status of the product identified by the product ID and the previous vendor ID, and if certified, transfer the certification status to the product identified by the product ID and the new vendor ID, then revoke the certification status for the old product entry.

An end device comprises a memory configured to store cryptographic keys and a transceiver configured to transmit and receive messages. The device (e.g. a controller of the device) is configured to send and/or receive a firmware update request and receive (e.g. from the managing entity 210 or a second device) the statement (published in the data storage unit 208 by e.g. the original vendor or the managing entity 210) authorizing and assigning a new maintainer to the device. The device is also configured to process (e.g., verify a digital signature of) the statement then allow or reject firmware updates from the new maintainer based on the outcome of the verification.

The data storage unit 208 may comprise or be implemented in the form of a decentralized compliance ledger (DCL), wherein the DCL is managed by the managing entity 210 and allows vendors to publish and update their products information.

The network/ fabric may comprise at least two nodes (e.g., communication devices). A first communication device may be configured to request/receive firmware updates. A second communication device may be configured to interact with the data storage unit 208 (e.g. the DCL) and provide the first device with firmware updates/upgrades.

As described, the system may comprise two or more nodes within a fabric, such that the first node may play the role of an OTA Requestor (i.e., a node or device, which requests/receives software/firmware update requests), and the second node may play the role of an OTA Provider (i.e., a node which may have internet access, interacts with the data storage unit 208, checks for, fetches, and transfers firmware updates/upgrades (i.e., updated versions of firmware images) to the OTA Requestor.

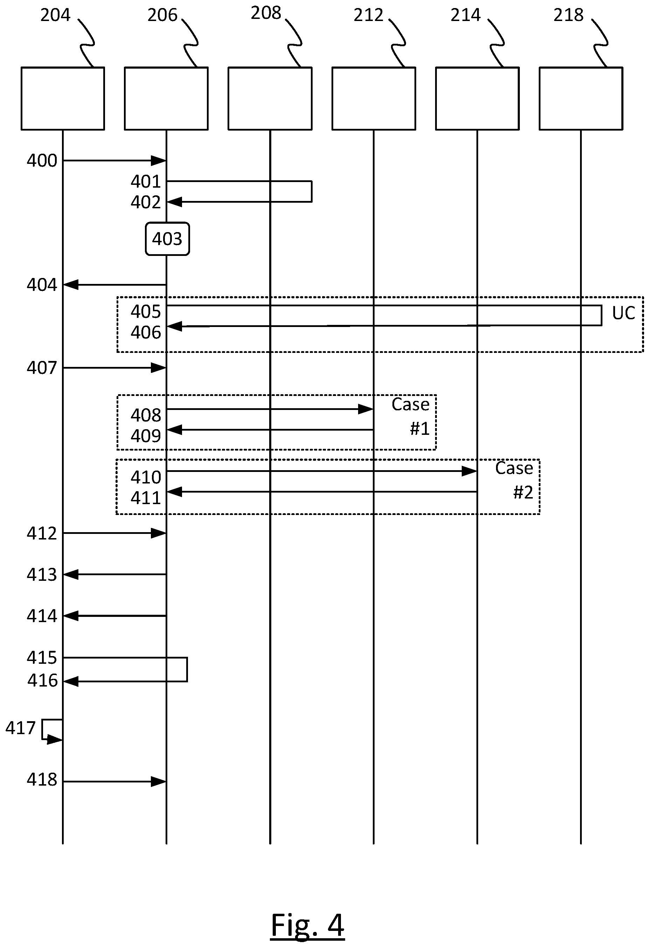

Fig. 4 shows an examples message flow to receive firmware updates/upgrades, and in particular to enable a new maintainer to provide firmware updates/upgrades to the products it was associated with. The flow involves an OTA Requestor and OTA Provider, the data storage unit 208 (e.g., DCL), the original vendor and new maintainer's servers, and the user/owner of the devices.

In some embodiments, a single node may be present that may implement the (logical) functionalities of both the OTA requester and provider. The firmware/software update procedure is described as follows whereby not all steps may be required, steps may be performed in a slightly different order, and/or performed more than once, or skipped.

In Step 404, the "busy' response is done to liberate the OTA requestor while the OTA provider is downloading the image, so it can be skipped if it is not needed to liberate the requestor, just wait until the firmware image is downloaded and return the "available" response directly. Compared with Matter, the steps that include the main changes are as follows.

In Steps 401-402, the selection algorithm in the OTA image selection logic is extended to check firmware versions with a revoked certification status, the revocation cause, and if included (e.g., in the revocation cause), retrieve the new maintainer information.

In Step 403, the OTA Provider checks the signature of the new maintainer transaction.

In Step 407, where applicable, the OTA Requestor updates its VID (i.e., to the new maintainer's VID) and informs the OTA provider of the successful VID update.

In Step 400, the OTA Requestor sends a QueryImage Command containing the information the OTA Provider requires (e.g., PID, VID, software version, protocols supported, etc) to check for a firmware update.

In Step 401, the OTA Requestor sends a RequestLatestSoftware with the information provided by the OTA Requestor, thus triggering the OTA Image Selection (IS) Logic, which is described in section 11.19.3 of the Matter Standard and summarised as follows. The IS algorithm takes as input the following: a subset of the fields of the Query Image command invoked by the OTA Requestor, VendorID (VIDo) of the requestor, ProductID (PID1) of the requestor, current software version of the requestor, and the list of all current entries for the product identified by (PID1, VIDo) from the Device Software Version Model Schema, ordered by software version. The IS algorithm returns as output the following: CandidateWasFound (a Boolean predicate indicating whether a newer version candidate was found), SoftwareVersionFound (the newer version candidate, if candidateWasFound was true, 0 otherwise). The algorithm works as follows:
1. Set candidateWasFound to False, and softwareVersionFound to 0.
2. Obtain candidate software versions from the DCL (e.g., cached or live replica) corresponding to (PID1, VIDo).
3. Sort candidate software versions from step 2 in ascending order
4. Iterate through the returned candidates to find all positive matches which fulfill the following conditions:
   a. requestor software version < candidate software version
   b. candidate min applicable software version <= requestor software version <= candidate max applicable software version
5. If there are positive matches, set candidateWasFound to True and softwareVersionFound to the software version corresponding to the last element of the list of positive matches. If no positive matches are found, return candidateWasFound and softwareVersionFound as is (i.e., as initialized in step 1).

According to some embodiments, the IS algorithm is enhanced as follows after step 3 of the algorithm:
i. Construct a subset from the list in step 3 which contains only entries fulfilling the condition:
   candidate software version >= requestor software version
ii. Iterate through the returned list and check whether any of the software versions' certification statuses have been revoked in the Device Software Compliance Schema. If any, that might indicate that the OTA Requestor might have been assigned a new maintainer. Therefore, for each entry in the list which correspond to a revoked certification status, the OTA Provider is to fetch the metadata associated with the certification revocation operation/transaction in the data storage unit 208 and check the cause of revocation.
iii. If any of the revocation transactions was due to a new maintainer being assigned to the OTA

Requestor, the OTA Provider fetches the transaction details (including metadata which may contain the new maintainer/vendor ID (VIDₘ) and public key), then perform the following:
- Rerun the algorithm using (PID₁, VIDₘ) in step 2 of the algorithm.
- If there exists an (updated) firmware/software version which fulfills the conditions in step 4 of the algorithm, set candidateWasFound to True and softwareVersionFound to the software version corresponding to the last element of the list of positive matches. If none, leave candidateWasFound and softwareVersionFound as initialized in step 1 of the algorithm.
- Finally, return the output of the IS algorithm with the transaction details (including metadata containing the new maintainer's ID and public key(s)) fetched in step iii.
- Else, move to step 4 of the algorithm.

In Step 402, based on the OTA Image Selection algorithm output, the OTA Provider either fetches a URL for the updated firmware image provided by the original vendor (e.g., case #1), or fetches the transaction details assigning a new maintainer to the OTA Requestor, in addition to the URL for an updated firmware image provided by the new maintainer, if any (e.g., case #2).

In Step 403, if case #2, the OTA Provider verifies the transaction/statement details/metadata which assigns the new maintainer to the OTA Requestor and whether it is cryptographically signed by the managing entity 210.

In Step 404, the OTA Provider transmits a QueryImageResponse to 301 which may contain the following:
Case #1: Busy response indicating an update may exist, but is not ready yet (e.g., requires user consent).
Case #2: Similar to Case #1, in addition to the transaction/statement details assigning the new maintainer to the OTA Requestor.

In Steps 405 and 406, consent is requested and obtained from the user, if not given in advance. These steps may also give an indication to the user that certain devices may have certain vulnerabilities (e.g., when the OTA provider monitors vulnerabilities of existing devices and/or software components in the existing devices) and ask permission for other actions such as monitoring of communications, limiting/filtering communications/functionality, etc.

In Step 407 (this step is relevant only in Case #2), when the OTA Provider receives the transaction/statement details in step 404, the OTA Requestor cryptographically verifies the statement/transaction details which are signed by the managing entity 210. Upon successful verification, the OTA Requestor updates the VID it is associated with, and sends an acknowledgment to the OTA Provider to retrieve the updated firmware/software image from the new maintainer's server.

In Steps 408 and 409 (these steps relate to Case #1, where no new maintainer was assigned to the OTA Requestor), if a new firmware update is available, the updated firmware image is downloaded from the original vendor's servers.

In Steps 410 and 411 (these steps relate to Case #2, where a new maintainer is assigned to the OTA Requestor), if a new firmware update is available, the updated firmware image is downloaded from the new maintainer's servers.

In Step 412, depending on which case is it, the OTA Requestor transmits a QueryImage Command with metadata indicating either the original vendor's ID (VIDo) e.g., case #1, or the new maintainer's ID (VIDm) e.g., case #2, as the vendor identifier.

In Step 413, if a new firmware update is available, the OTA Provider indicates to the OTA Requestor that the updated firmware image is available.

In Step 414, the OTA Requestor downloads the new firmware version image from the OTA Provider.

In Steps 415 and 416, which correspond to the UpdateApplyRequest, the OTA Requestor requests permission from the OTA Provider to apply the firmware update, and the UpdateApplyResponse, where the OTA Provider responds to the request.

In Step 417, the OTA Requestor applies the firmware update/upgrade.

In Step 418, the OTA Requestor notifies the OTA Provider that the update is applied.

In some embodiments, the check performed in step iii of the above algorithm (as executed after Step 3) may be performed on the X most recent revocation transactions instead of any revocation transaction, where X may be determined e.g., through a policy, or as part of the image selection logic, by the managing entity 210.

In some embodiments, the managing entity 210 may define a policy to manage (e.g., revert back to an original vendor) devices for which new maintainers are assigned. For instance, where the original vendor of a device, which was assigned a new maintainer, publishes a new firmware/software update, and the OTA Requestor and Provider have already updated the device association (i.e., PID is linked to the VID of the new maintainer), the original vendor's updated firmware won't be considered. Such action by the original vendor may be detected and trigger a process to re-assign the device to the original vendor.

In some embodiments, the original vendor may be instructed (e.g., according to a policy defined by the managing entity 210) to make available the firmware update to the new maintainer which will then publish it. The certification status of the new firmware version published by the original vendor may therefore be revoked, with managing entity 210 re-stating the cause of revocation. Note that if the managing entity 210 implements such an approach, it would be sufficient for the check in step iii to be performed on the last revoked statement alone.

In some embodiments, the managing entity 210 may set/define the conditions for which a device may be re-assigned to its original vendor after it has been assigned to a new maintainer. For instance, the managing entity 210 may determine a time period (e.g., 6 months) during which the original vendor's ability and consistency in maintaining its product(s) is evaluated.

In some embodiments, the managing entity 210 may set/define the conditions for which a product may permanently be disassociated from its original vendor e.g., failure to meet maintenance obligations for X (determined by the policy) number of times.

The embodiments described above consider that the original product vendor and/or the new maintainer are in charge of releasing firmware updates for the whole product. However, there are situations in which the product vendor may only provide the application logic while other entities may be in charge of releasing firmware updates for other software components, e.g. drivers for sensors/actuators, networking libraries, OS, e.g., the Mbed-OS platform that is a Matter platform using ARM Mbed-OS. The software functionality in a Matter platform is modular, and modular approaches for over-the-air software updates in IoT are feasible. Beyond security, modular software updates also have other benefits such as reduce communication/computational/energy cost.

Specific embodiments variants enabling modular software updates in above procedures are as follows.

In some embodiments, a vendor publishes a modular description of the software including multiple modules as illustrated in Fig. 1 wherein the trusted sources of the different modules are indicated, e.g., sources to provide application code, networking libraries, Matter adaptation layer, etc. The vendor may indicate (e.g., through an ACL that may be shared with the managing entity 210) whether it allows those trusted sources to publish module updates, e.g., a trusted source delivering a networking library module may be authorized to provide an update of the networking library module (i.e., where applicable e.g., the firmware is modular, a device may be assigned one or multiple maintainers (e.g., each handling a component/module).

In some embodiments, a device which runs a firmware with a modular architecture may have a main/principal maintainer (e.g., device manufacturer/vendor) and/or several secondary maintainers (e.g., per module), wherein the updates may either be provided solely by the main/principal maintainer(s) while the secondary maintainers only announce modular updates' availability, or each secondary maintainer may be allowed to push/provide updates directly to the devices.

In some embodiments, the main maintainer and/or the managing entity 210 certification center may also verify the modules' updates provided by the secondary maintainers and certify (e.g., in the managing entity certification center's case) them.

In some embodiments, the managing entity 210 (e.g., the managing entity certification center) or a vendor may be in charge of verifying which modules are compatible with each other, and/or which are compliant and publishing a statement thereof, e.g., in the data storage unit 208.

In some embodiments, the OTA requestor and/or OTA provider may check whether new module updates are available in the data storage unit 208, and the OTA provider may check a published statement (e.g., by the secondary maintainers) to verify whether the new module updates are compliant and compatible with existing modules in the device firmware.

In some embodiments, the digital certificate chain of trust and the certificate contents may be adapted to support modular firmware updates.

The PAA may issue Module Certification Certificates (MCC) and associated signing keys to authorized module updates' providers, e.g., entities in charge of the
development/management/maintenance of networking libraries, Operating Systems, libraries, Matter adaptation layers, etc.

A list of authorized modules (module providers, MCCs) may be stored in the device and this list may be signed, wherein the signature may be part of a certificate, e.g., DAC. A device may only accept an available module update if the module MMC is included in the DAC and the module signature verification succeeds and the module is compatible with existing modules.

In some embodiments, the device model schema is enhanced to include aspects about the firmware modules used in the device, e.g., the firmware modules, the providers of the firmware modules, the allowed versions of the modules, interoperability aspects between modules, etc.

In some embodiments, the device software version model schema is enhanced to include aspects about the firmware modules used in the device, e.g., the firmware modules, the version of the firmware modules, the providers of the firmware modules, etc.

In some embodiments, module firmware update providers need to make sure that all the firmware modules that are available for the devices are compatible. Compatibility may be understood as standalone from the point of view of a device, this is in charge of the update provider, who needs to check if the modules available for a device are compatible with each other, but the compatibility also needs to be considered between devices in the same network / system and this is more related to managing entity 210 or the smart home fabric operator, I.e., the operator of the smart home devices.

In some embodiments, to publish certificated messages between the entities containing information about the firmware updates, the following schemas are registered.

Software Modules Product Schema: DCL statement that indicates the different modules used in each firmware. This should be issued by the Vendor. These statements may be used by the Central Management Server to update the register of the device's firmware versions and the modules versions. In this way, when an updates issuer publishes this statement, the Central Management Server should read it from the DCL and update its data base with the new versions. The schema may include: VID of the issuer, PID of the product affected, Firmware Version code, and a list of the modules used, VID of each module provider, and current version of each module.

Module Update Provider Schema: DCL statement that allows a Module update provider to provide updates for designated devices. These modules may be applicable to specific device types, e.g., using the firmware module. The schema includes: a VID of the issuer, a PID of the product affected, and a VID of the Module update provider.

Module Version Schema: DCL Statement similar to the Software Version Model Schema but dedicated to serve and register firmware modules. These are issued and signed by the Module Update Provider, contains an URL to locate the module image. The schema includes: a VID of the issuer, a Module Version code, a URL of the image, and a Compilation/Certification Status.

In some embodiments, to reach an agreement governing the usage of modular firmware, verification of firmware modules, and deployment, the following entities may be involved wherein the "smart home fabric operator" and "module update provider" are new entities not considered so far:
A) Vendor: original manufacturer or new maintainer of the device and main update provider. It can provide product module information (e.g., by publishing an entry in the Software Modules Product Schema), upload firmware module updates (updates entries in the Software Version Model Schema and Software Modules Product Schema) and is the one who can assign a new module maintainer for its products (e.g., by publishing an entry in the Module Update Provider Schema).
B) OTA Provider: Device that performs the necessary operations to provide the OTA requestor with a modular update (e.g., determine the update image availability and notify OTA Requestor thereof). Usually managed by the smart home fabric operator.
C) OTA Requestor: Device that requests an update of its firmware, that could be provided by a Vendor or by a Module Update Provider.
D) MANAGING ENTITY: Central entity that acts as the root of trust and may provide the following functionalities:
   - Provide a way to register the software modules applicable or deployed in each device type (Central management server)
   - Provide a way for the Vendors and the Module Update Providers to indicate the firmware modules' versions used in each device type which is in charge of (Software Modules Product Schema)
   - Provide a standardized way to upload a firmware module update image (Software Version Model Schema) and to designate another update provider (Module Update Provider Schema).
   - Offer a way to compile a firmware image when a module update provider requests it (Compilation Server).
   - Also, could be in charge of maintaining a test network/emulation environment/digital twin to test the updates previously to deploy it (Test Environments).
E) Smart home Fabric Operator: Entity managed by a smart home provider (e.g., Google, Amazon, Apple, etc.) that is in charge of operating/coordinating a specific smart home fabric composed by devices of different manufacturers. A smart home fabric could be understood as a set of smart home devices in a smart home connected via Wi-Fi or Thread networks. For that, this entity could be in charge of the compatibility analysis between the different software modules installed in the devices of the smart home fabric.
F) Module Update Provider: Update provider designated for a specific module(s) and/or for a specific product(s). It can provide product module information (e.g., publish entries in the Software Modules Product Schema) and upload firmware module updates (e.g., publish entries in the Module Version Schema) to the products making use of one or more of the modules it maintains/provides.

In some embodiments, a Module Update Provider Schema is defined, allowing publication of statements (e.g., in a storage unit or block chain) that allow a vendor/firmware module maintainer to provide updates for designated firmware modules. These modules may be applicable to specific device types, e.g., using the firmware module. Once this statement is published (e.g., by the vendor or the module maintainer/provider), the designated updates provider can publish a new entry in the Model Software Version Schema for the device to refer to an updated module. A managing entity 210 may implement in the storage unit (e.g., Decentralized Compliance Ledger) the schema to register such statements and the functionality to publish/read them, then the Vendor may issue/publish a statement or update an entry to designate an update provider (identified by a Vendor ID) for a specific firmware module.

In some embodiments, the system may comprise a compilation server that receives the firmware module image and the linker metadata about the modules involved, to perform the pre-link between the updated firmware module and the rest of the modules/application code. The pre-link phase performs the linking task in a previously defined way in a dedicated server. Another approach could be the dynamic linking, where the linking task is performed in the device. There are two approaches for the pre-link.

The first is a strict binding model that statically links a code block by another replacing it by the correct physical address in the device. To use this approach, it is needed to know the exact memory addresses of both code blocks, for that it is practically impossible to relink modules after installation if other modules are updated, due to the original memory addresses that may be modified when other modules are installed. For that, this method could only be used to update/add application code blocks.

The second is a loosely coupled binding linker- the approach uses an indirect function call mechanism and a jump table to redirect function calls between code blocks, by modifying the jump table, the different function calls could be redirected to the right memory address. This mechanism allows to link code blocks even when other updates are performed and the right memory address is not known, that is useful to link the modular updates.

The compilation server may be deployed by the main updates provider, for example in those cases in which the firmware is updated entirely; or the compilation server could be located in the managing entity 210, for those cases in which a module update provider wants to issue an update for a module, in this case the provider sends the URL/location of the firmware module update to the managing entity Compilation Server and managing entity 210 is in charge of compiling it with the others parts of the firmware.

In some embodiments, the system may comprise a Central Management Server that keeps track of the software module versions available or installed on each device to provide it for compatibility analysis. It may keep a record with the identifiers of the different device types in the network, a list of firmware versions in each device and a list of modules used in each firmware version. This server may be implemented and maintained by the managing entity 210 and/or by a smart home Fabric Operator who is in charge of the devices of all the network/fabric devices.

In some embodiments, the system may comprise a Software Modules Product Schema in a storage unit (e.g., DCL) that allows publication of statements indicating the different modules involved/used in/for each firmware. These statements could be used by the Central Management Server to update the register of the device's firmware versions and the modules versions. In this way, when an updates issuer publishes a statement, the Central Management Server may read it from the storage unit and update its database with the new versions. The Vendor or the Module maintainer may issue/publish a statement indicating which module versions are used in a firmware version, identified by the VendorID-ProductID pair and the firmware version number/code.

In some embodiments, the system comprises a compatibility analysis function that allows, once the new firmware module is linked and compiled, e.g., in the managing entity 210 or vendor server, the update provider to test and check if the new module is compatible with the other modules in the device and with other parts of the system. Compatibility tests may include, but are not limited to, the following:
- Platform compatibility: Verify if the module is compatible with the target hardware (standalone compatibility).
- Inter-module compatibility: Verify if the module is compatible with the other modules installed in the target device (standalone compatibility).
- Network/inter-device compatibility: Verify if the module is compatible with other versions of the same module installed in different devices of the network (device compatibility with other devices in the (smart home) network/fabric).

To perform these verifications, the main firmware update provider may rely on the central management server that keeps track of the software versions available for each device type and for the different devices available in a network/fabric. The main firmware update provided module update provider can check whether specific module/hardware combinations are operationally compatible or not, within a device and with other devices in the fabric. This may involve / be done by executing tests or emulating the device implementing all the specific combination of modules reflected in the Central Management Server. The compatibility tests may be implemented and performed by the update issuer. For instance, if it is a module update, it may be performed by the module maintainer and if it is a whole firmware update, it may be performed by the main update provider.

In some embodiments, the system may comprise a testing environment, e.g., based on a Test Network/Digital Twin, to test the update in a replica environment (e.g., of a smart home fabric) before deploying the update in the live environment. This test network simulates the real devices and the different software versions deployed. For that, a digital twin may be used wherein the digital twin of a device needs to be updated every time the devices undergo changes. These updates could be coordinated by the Central Management Server. If the network/fabric involves only devices owned by a single Vendor, the digital twin may be deployed and updated by the Vendor itself. If the network/fabric involves smart home devices from multiple vendors, the smart home fabric operator (e.g., Google, Apple, Amazon, etc.) or managing entity 210 may deploy and update the digital twin. The digital twin may be available for any updates provider to allow it to perform the pre-deployment behavioural verification.

In some embodiments, the system may comprise a Pre-deployment behavioural verification to test the modular update, e.g., in the digital twin, to ensure that the update improves/keeps/fulfils the network performance and stability (Quality of Service/Application requirements). It makes qualitative analysis to check the local node behaviour and the network QoS. This process could reveal issues that are not detected in the compatibility analysis phase, for example by checking whether the throughput and the latency requirements are still fulfilled. Another test environments could be used to analyse the local node behaviour, for example, a sandbox or testbed enables testing the software in a controlled environment on real hardware. This verification may be performed by the update issuer; if it is a module update, it may be performed by the module maintainer, and if it is a whole firmware update, it may be performed by the main update provider.

The embodiments above may be implemented to realize the following procedures.

There are preconditions, namely:
- to start with a full implementation, in which exists a Vendor that owns at least one device.

The Vendor is registered in the Vendor Schema published in the DCL.
- the Device is registered in the Product Model Schema and the firmware versions (the current and the past ones) of the device are registered in the Software Model Version Schema in the DCL.

First Phase: (Introduce / Implement modular updates in Matter). The CSA (or equivalent organisation) defines/introduces three schemas to the DCL: one for designating new firmware module update providers (Module Update Provider Schema), one to publish new modules (Module Version Schema) and one to track the modules included in a firmware version (Software Modules Product Schema). The CSA, or Matter fabric operator, or vendor may have means, e.g., digital twin (emulation system etc.), and software module product schema to perform the necessary Compatibility Analysis. To this end, the CSA (or equivalent) may require Software Modules Product Schema entries for all the Matter certified products with a modular firmware, or the Matter Fabric Operator may require the Software Modules Product Schema entries for all the devices with a modular firmware that belong to the Fabric. The CSA or Matter fabric operator or vendor may run a compilation server to compile the firmware image with the updated modules; this server may require access to the user application code and to the modules involved. Therefore, it is reasonable that this server is deployed and operated by the Vendor. The CSA or Matter fabric operator or vendor may rely on a central management server to keep track of available module (versions). The vendor or Matter fabric operator should upgrade the OTA Provider devices to a new firmware version capable of handling modular firmware/software updates, e.g., capable of monitoring and notifying about specific modular software updates. Similarly, vendors should update their products, which use a modular firmware, to a new firmware version capable of performing a modular update, that is to apply the module update following the performed in the pre-link compilation server. The CSA may provide the module update provider with credentials (e.g., cryptographic keys) to publish and updates entries in the Module Version Schema.

Second Phase: (Designating a module update provider and approval of an updated firmware module). A Vendor that wants to enable modular firmware updates in a device type may publish a statement in the Software Product Modules Schema for that device stating that a device type supports modular updates. The vendor may publish a statement in the Module Update Provider Schema to designate a module update provider for one or multiple modules. The Module Update provider may publish statements in the Module Version Schema containing information about a module version e.g., URL associated to the compiled module image. The CSA/fabric operator/vendor may perform compatibility analysis and publish/update the compatibility status of modules that underwent compatibility tests. Compatibility analysis may be performed as follows:
- The Compilation Server of the Vendor that wants to update a product retrieves the module image and the image of the other parts of the firmware to perform the pre-link task and obtain a complete firmware image for the test environment.
- The Vendor may perform the platform compatibility and the inter-module compatibility tests.
- The CSA or the Matter Fabric Operator retrieves the firmware image to perform the Network/inter-device compatibility analysis.
- Once the compatibility analysis is complete, the CSA determines the compliance status (level) of the module and publishes/updates an entry in the Module Version Schema reflecting the compatibility/compliance status. At this point, the Modular update is valid with a given validity level. For instance, the validity level may be between devices of the same type, or between devices of type X and Y.

Third Phase: (Applying a modular update). The OTA Requestor queries the OTA Provider for an update. The OTA Provider makes use of an algorithms also known as Image Selection Logic (ISL) to check for updates. The Image Selection Logic checks whether there are updates from the Main Update provider, then whether there is a Module Update Provider for that VID-PID. If there is a Module Update Provider Schema entry, the Image Selection Logic checks if there is a new Module Version Update issued by the module update provider for the module indicated in the schema and whether it has an approved compilation status and a successful compatibility test e.g., by the vendor and CSA/Matter operator. The OTA Provider retrieves the firmware module image if a module update exists, then checks the signature of the issuer of the module update, whether the issuer is registered in the Module Provider Schema associated to the VID-PID and verifies the signature(s) of the vendor and/or the module update provider. The OTA Provider may also check, e.g., if the module update exists but it is not compatible with all other device types, if the module is compatible in the local fabric by checking whether the modules in the local fabric are compatible among each other based on the results of the compatibility/compilation tests. The OTA provider serves the module image to the OTA requestor if the compatibility check succeeds. The OTA requestor checks the signature of the issuer of the module update and the compilation status, checks if the issuer is registered in the Module Provider Schema associated to the VID-PID, and verifies the signature(s) of the vendor and/or the module update provider. Once the image is downloaded by the OTA requestor, the OTA provider may notify the module update provider server that the update is ready and waits for the confirmation to start the update. Alternatively, the OTA provider may sync the updates to ensure that devices/OTA requestors which use the same module and belong to the same fabric are updated simultaneously. When all the OTA requestors in the same local fabric are ready, the module update provider / OTA provider may send a signal to all devices to start the update simultaneously. When the OTA requestor links his firmware to the modular update following the link information acquired from the pre-link compilation server.

In some embodiments, the Software Modules Product Schema -- originally designed to register the different modules used in a firmware version of a product -- may include a URL to download the linking metadata between each module version and the firmware version in this schema. The linking metadata may be different for each module and for each firmware version/device. The OTA Provider can benefit from this schema by reading from it the URL with the linking metadata and downloading it to apply the update, or provide the metadata to the OTA Requestor.

In these embodiments, the compilation status of a module that is registered in the Module Version Schema -- and is approved when one or more devices that use the module are compliant and pass all the compatibility analysis -- may be registered in the Software Modules Product Schema in a way that there is one compilation status for each module-firmware version.

According to these embodiments, when a module update is issued by the module provider, a new entry in the Software Modules Product Schema may be issued/published by the vendor, e.g., after performing the pre link compilation and after successfully performing the compatibility analysis. In addition to the firmware version and the modules version list, this schema may include a URL to download the linking metadata, and the compilation status for each module and firmware version.

Furthermore, according to these embodiments, when an OTA Provider finds a new Module Version applicable to the OTA Requestor, the OTA Provider may look for the Software Modules Product Schema, check the modules used in the OTA Requestor, check the compilation status, and get the URL with the linking metadata between the firmware version and the module updated.

Although the embodiments have been described in the context of IoT networks, their applications are not limited to such a type of operation. They may be applied to any device or network of devices, such as applications for healthcare, stores, shopping malls, the sports club, etc.

Furthermore, at least some of the embodiments can be applied to various types of UEs or terminal devices, such as mobile phones, vital signs monitoring/telemetry devices, smartwatches, detectors, vehicles (for vehicle-to-vehicle (V2V) communication or more general vehicle-to-everything (V2X) communication), V2X devices, Internet of Things (IoT) hubs, IoT devices, including low-power medical sensors for health monitoring, medical (emergency) diagnosis and treatment devices, for hospital use or first-responder use, virtual reality (VR) headsets, etc.

Other variations to the disclosed embodiments can be understood and effected by those skilled in the art in practicing the claims, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments. It will be appreciated, however, that no matter how detailed the foregoing appears in the text, these embodiments may be practiced in many ways, and is therefore not limited to the embodiments disclosed. It should be noted that the use of particular terminology when describing certain features or aspects should not be taken to imply that the terminology is being re-defined herein to be restricted to include any specific characteristics of the features or aspects with which that terminology is associated. Additionally, the expression "at least one of A, B, and C" is to be understood as disjunctive, i.e., as "A and/or B and/or C".

A single unit or device may fulfil the functions of several items recited in the claims. The mere fact that certain measures are recited in mutually different dependent claims does not indicate that a combination of these measures cannot be used to advantage.

The described operations like those indicated in the above embodiments (e.g., Figs. 2 to 5) may be implemented as program code means of a computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. A computer-implemented method for authorizing a providing entity to provide updates to a target device, wherein the target device is configured to process updates only from an authorized providing entity, wherein a data storage unit comprises entries relating to one or more devices, wherein the method is performed by a managing entity and comprises:
determining that the data storage unit comprises, or adding to the data storage unit, an entry to associate the new providing entity with the target device, so as to provide updates to the target device;
determining that the new providing entity is associated with a valid digital certificate signed with a cryptographic signature of the managing entity or of a previous providing entity authorized to provide updates to the target device, and in response, publishing in the data storage unit a cryptographically signed statement authorizing the new providing entity to provide updates to the target device.

2. The method of claim 1, wherein each providing entity is associated with a respective provider identifier, wherein the entries relating to the one or more devices comprise respective update certification statuses, each update certification status linked to a respective software module identifier, and wherein the method comprises:
linking an update certification status of a software module or firmware to the provider identifier of the new providing entity.

3. The method of claim 2, comprising:
verifying the respective update certification status linked to the software module identifier of the software module or firmware and a provider identifier of the previous providing entity; and
if said verification passes, transferring the update certification status to the new providing entity by revoking the update certification status linked to the provider identifier of the previous providing entity and performing said linking of the update certification status of the software module or firmware to the provider identifier of the new providing entity.

4. The method of any preceding claim, comprising determining that a new providing entity is required to provide updates to the target device.

5. The method of claim 4, comprising receiving or detecting a request from the previous providing entity to terminate authorization of the previous providing entity to provide updates to the target device, wherein said determining that the new providing entity is required to provide updates to the target device is based on said receiving or detecting of the request.

6. The method of claim 5, wherein the request comprises an indication of the new providing entity.

7. The method of any of claims 4 to 6, comprising determining that the previous providing entity has not provided an update to the target device during a time period, wherein said determining that the new providing entity is required to provide updates to the target device is in response to determining that the previous providing entity has not provided an update to the target device during a time period.

8. The method of any of claims 4 to 7, comprising receiving or detecting an indication, from a different device belonging to the same network as the target device, that the target device has not been provided an update during a time period, wherein said determining that the new providing entity is required to provide updates to the target device is in response to determining that the previous providing entity has not provided an update to the target device during a time period.

9. The method of claim 7 or claim 8, wherein a duration of the time window is determined by any of the managing entity, the previous providing entity, the different device and a device standard.

10. The method of any of claims 7 to 9, wherein a duration of the time window is based on a severity of one or more vulnerabilities in one or more devices modules of the target device.

11. The method of claim 10, wherein the time window is triggered in response to detection of the one or more vulnerabilities.

12. The method of claim 11, comprising receiving an alert of the one or more vulnerabilities from the different device.

13. The method of any preceding claim, comprising providing the new providing entity with the device identifier of the target device to enable the new providing entity to submit the entry to the data storage device.

14. A computer-implemented method of updating software and/or firmware of a device, wherein a data storage unit comprises entries relating to one or more devices and/or types, wherein the method is performed by a target device and comprises:
obtaining an update for at least part of the software and/or firmware of the device, wherein the update is provided by a new providing entity;
obtaining a statement authorising the new providing entity to provide updates to the target device;
verifying that the statement is cryptographically signed by a managing entity or a previous providing entity; and
processing the update, wherein said processing of the update is dependent at least upon said verification of the statement.

15. The method of claim 14, wherein the at least part of the software and/or firmware is a module.

16. The method of claim 14 or claim 15, wherein the update is associated with a software or firmware identifier, and wherein the method comprises:
obtaining an update certification status linked to the software or firmware identifier and the provider identifier of the new providing entity; and
verifying that the update certification status is cryptographically signed by the managing entity, wherein said processing of the update is dependent at least upon said verification of the update certification status.

17. Computer equipment comprising:
memory comprising one or more memory units; and
processing apparatus comprising one or more processing units, wherein the memory stores code arranged to run on the processing apparatus, the code being configured so as when on the processing apparatus to perform the method of any of claims 1 to 15.

18. A computer program embodied on computer-readable storage and configured so as, when run on one or more processors, to perform the method of any of claims 1 to 15.
